# EUROPÄISCHE PATENTANMELDUNG

(11) **EP 2 083 152 A1**
(43) Veröffentlichungstag der Anmeldung: **29.07.2009**
(21) Anmeldenummer: 09151202.0
(22) Anmeldetag: 23.01.2009
(51) Int. Cl.: F02B 63/04, F16H 23/00, H02K 7/18

(54) **Taumelgetriebe, Verbrennungsmotor und Energieerzeugungssystem mit einem solchen Getriebe, und Verfahren zur Erzeugung elektrischer Energie**

(30) Priorität: 23.01.2008 DE 102008006137
(71) Anmelder: POHL GbR Manfred Pohl, 14943 Luckenwalde (DE)
(72) Erfinder: Pohl, Manfred, 14943, Luckenwalde (DE); Noack, Gerhard, 14943, Luckenwalde (DE)
(74) Vertreter: Gulde Hengelhaupt Ziebig & Schneider

(57) **Zusammenfassung**

Die Erfindung betrifft ein Taumelgetriebe, an welches mindestens eine und maximal zwei Kolben-Zylinder-Einheiten anschließbar sind, wobei die beiden Kolben-Zylinder-Einheiten (91) einander gegenüberliegend auf je einer Seite des Taumelgetriebes (20) anschließbar sind und wobei das Taumelgetriebe (20) eine von einem Taumelglied antreibbare Abtriebswelle (30) umfasst und wobei das Taumelgetriebe (20) derart ausgestaltet ist, dass mit ihm im Betrieb mit einer angeschlossenen Kolben-Zylinder-Einheit (91) oder auch mit zwei angeschlossenen Kolben-Zylinder-Einheiten (91) ein Drehmoment mit ausreichender Stärke und Kontinuität zum Antrieb eines Generators auf die Abtriebswelle (30) aufbringbar ist.

Des Weiteren betrifft die Erfindung ein dieses Taumelgetriebe (20) umfassendes Getriebesystem, einen das Taumelgetriebe (20) umfassenden Verbrennungsmotor, ein das Getriebesystem umfassendes Verbrennungsmotorsystem zur Übersetzung von Antriebskräften zum rotatorischen Antrieb eines Generators und die Erzeugung von elektrischer Energie auf Basis der Verwendung des erfindungsgemäßen Taumelgetriebes (20), Getriebesystems, des erfindungsgemäßen Verbrennungsmotors und des Verbrennungsmotorsystems.

## Beschreibung

Die vorliegende Erfindung betrifft ein spezielles Taumelgetriebe, ein dieses Taumelgetriebe umfassendes Getriebesystem, einen das Taumelgetriebe umfassenden Verbrennungsmotor und ein das Getriebesystem umfassendes Verbrennungsmotorsystem zur Übersetzung von Antriebskräften zum rotatorischen Antrieb eines Generators.

Des Weiteren ist der Gegenstand der Erfindung die Erzeugung von elektrischer Energie auf Basis der Verwendung des erfindungsgemäßen Taumelgetriebes, des Getriebesystems, des erfindungsgemäßen Verbrennungsmotors und des Verbrennungsmotorsystems.

Eine Vielzahl von Antrieben für Rotationsmaschinen zur Energieerzeugung wird durch Verbrennungsmotore realisiert. Es kommen dabei Otto- oder Dieselmotore in Reihen-, V- oder Boxeranordnung zum Einsatz, die jeweils mit einer Kurbelwelle ausgestattet sind. Insbesondere für den Einsatz in kleineren Kraftwerksanlagen werden Kolben-Zylinder-Einheiten statt Turbinen verwendet.

Es besteht dabei üblicherweise die Zielstellung des zu minimierenden Volumens bei maximaler Leistungsabgabe. Der Einsatz eines Taumelscheibenmotors ermöglicht eine solche Volumenreduzierung durch die Vermeidung des Einsatzes einer Kurbelwelle. Der Drehabtrieb des Taumelscheibenmotors verläuft üblicherweise parallel zur Kolbenbewegungsrichtung. Es wird des Weiteren der Einsatz eines Zahnriemens, einer Kette oder Stößel zur Ventilbetätigung vermieden, wodurch sich insgesamt die Anzahl der zu beschleunigenden Bauelemente verringert und somit der Wirkungsgrad und die Leistung des gesamten Motors vergrößert.

Es besteht dabei insbesondere bei Verbrennungsmotoren zum Antrieb von Energieerzeugungsanlagen für zum Beispiel Wohngebiete oder kleine bis mittlere Herstellungsbetriebe die Anforderung, die Leistung der Energieerzeugungsanlage den tatsächlichen Bedürfnissen anzupassen. Das bedeutet, dass Energieerzeugungsanlagen derart ausgelegt werden müssen, dass mit ihnen eine den tatsächlichen Bedürfnissen entsprechende maximale Leistungsabgabe möglich ist und bei weniger angeforderter Leistung eine verringerte Leistungsabgabe realisiert werden kann. Dies hat den Nachteil, dass zuzeiten der verringerten Leistungsnachfrage die Energieerzeugungsanlage mit einem ungünstigen Wirkungsgrad betrieben wird, dass sie überdimensioniert und demzufolge in ihren Anschaffungs- und Betriebskosten nicht wirtschaftlich ist bzw. dass ein zusätzlicher Energiespeicher zur Verfügung stehen muss, der es ermöglicht, die Energieerzeugungsanlage in kürzeren Intervallen unter Volllast zu betreiben und die damit erzeugte Energie zur Bereitstellung über längere Zeiträume zu speichern. Insgesamt ist also eine nicht an die tatsächliche Leistungsnachfrage flexibel anpassbare Energieerzeugungsanlage in der Anschaffung und im Betrieb kostenintensiv.

Aus dem Stand der Technik sind verschiedene Taumelmotore im Zusammenhang mit Getrieben bekannt. Es zeigt zum Beispiel die WO 97/10415 einen Taumelscheibenmotor mit mehreren im Wesentlichen im Bereich des Umfangs der Taumelscheibe angeordneten Kolben-Zylinder-Einheiten, deren Antriebskräfte umlaufend auf die Taumelscheibe derart übertragen werden, dass diese ein Moment auf die Abtriebswelle überträgt. Dieser Taumelscheibenmotor ist lediglich durch die Menge der Kraftstoffzufuhr in die Kolben-Zylinder-Einheiten regelbar. Eine weitere Anpassung an schwankende Leistungsanforderungen kann in oder mit dem Taumelmotor nicht realisiert werden.

Die Patentschrift US 1,577,010 zeigt einen Taumelscheibenmotor mit zwei Wellen. Auf einer der Wellen ist eine Ausgleichsmasse befestigt. Auch bei diesem Taumelscheibenmotor lässt sich die Anpassung an schwankende Leistungsanforderungen lediglich durch die Änderung der Zufuhr des Kraftstoffs zu den einzelnen Kolben-Zylinder-Einheiten regeln.

Bei beiden Taumelscheibenmotoren ergibt sich durch die wechselnden Belastungsfälle der Scheibe bzw. der Taumelstangen eine Schwingungseinleitung in die Motore. Die erzeugten Schwingungen wirken sich ungünstig auf die daran gekoppelten Aggregate sowie auf den Betrieb der Taumelscheibenmotore selbst und deren Lebensdauer aus.

In der DE 34 58 13 ist ein Taumelscheibenmotor dargestellt, in dem zwei Taumelgetriebe wirken. Die Besonderheit bei diesem Taumelscheibenmotor ist, dass die Kolben-Zylinder-Einheiten des zweiten Taumelgetriebes um einen bestimmten Winkelbetrag versetzt zu den Kolben-Zylinder-Einheiten des ersten Taumelgetriebes angeordnet sind. Wie auch bei den vorher beschriebenen Taumelscheibenmotoren lässt sich auch in dieser Ausgestaltung eine Anpassung an schwankende Leistungsanforderungen nur durch Änderungen der Kraftstoffzufuhrmenge realisieren.

Die aus dem Stand der Technik bekannten Taumelscheibenmotore weisen große räumliche Abmessungen auf und haben somit einen relativ hohen Volumenbedarf.

Der Erfindung liegt daher die Aufgabe zugrunde, ein Antriebssystem auf Basis von wenigstens einem Taumelgetriebe zur Verfügung zu stellen, welches volumenoptimiert und schwingungsminimiert betreibbar und Leistungsschwankungen kostengünstig anpassbar ist. Des Weiteren liegt der Erfindung die Aufgabe zugrunde, ein kostengünstiges und volumenoptimiertes Verfahren zur Erzeugung elektrischer Energie zur Verfügung zu stellen.

Die genannten Aufgaben werden durch das im Anspruch 1 genannte Taumelgetriebe , durch das in Anspruch 5 genannte Getriebesystem, durch den im Anspruch 7 genannten Verbrennungsmotor und durch das im Anspruch 15 genannte Motorsystem sowie durch das im Anspruch 19 genannte Verfahren zur Erzeugung elektrischer Energie erfindungsgemäß gelöst. Vorteilhafte Ausgestaltungen der genannten Erfindungen schließen sich in den jeweiligen Unteransprüchen an.

Es wird erfindungsgemäß ein Taumelgetriebe zur Verfügung gestellt, an welches mindestens eine und maximal zwei Kolben-Zylinder-Einheiten anschließbar sind. Im Fall von zwei Kolben-Zylinder-Einheiten sind die beiden Kolben-Zylinder-Einheiten dabei einander gegenüberliegend auf je einer Seite des Taumelgetriebes anschließbar. Das Taumelgetriebe umfasst des Weiteren eine von einem Taumelglied antreibbare Antriebswelle und ist derart ausgestaltet, dass es im Betrieb mit einer angeschlossenen Kolben-Zylinder-Einheit oder auch mit zwei angeschlossenen Kolben-Zylinder-Einheiten ein Drehmoment mit ausreichender Stärke und Kontinuität zum Antrieb eines Generators auf die Abtriebswelle aufbringen kann.

Das heißt, dass das erfindungsgemäße Taumelgetriebe so ausgelegt ist, dass es auch im Zusammenwirken mit nur einer Kolben-Zylinder-Einheit ausreichend funktioniert. Das heißt unter anderem, dass das Taumelgetriebe derart ausgestaltet ist, dass auch im Betrieb mit nur einer Kolben-Zylinder-Einheit zum Beispiel Totpunkte ausreichend sicher überwunden werden können. Das erfindungsgemäße Taumelgetriebe ist, wenn es bereits mit einer Kolben-Zylinder-Einheit versehen ist, um eine weitere Kolben-Zylinder-Einheit erweiterbar. Somit ist das erfindungsgemäße Taumelgetriebe an veränderte Leistungsanforderungen flexibel anpassbar. Vorteilhafterweise sind bei Anordnung von zwei Kolben-Zylinder-Einheiten diese derart am erfindungsgemäßen Taumelgetriebe angeordnet, dass die Achse der Abtriebswelle des Taumelgetriebes der Symmetrieachse für die Anordnung der beiden Kolben-Zylinder-Einheiten entspricht. Das erfindungsgemäße Taumelgetriebe umfasst als Taumelglied Taumelstangen, die in einer Taumelscheibe geführt sind. Des Weiteren weist es wenigstens einen Mitnehmer auf, der über Mitnehmerzapfen mit der Taumelscheibe bzw. über die Taumelscheibe mit den in der Taumelscheibe fixierten Taumelstangen mechanisch verbunden ist. Das heißt, dass die Taumelscheibe zusammen mit den Taumelstangen das Taumelglied des Taumelgetriebes ausbildet. Es kann dabei auch vorgesehen sein, dass an einer Taumelscheibe nicht zwei getrennte Taumelstangen angeordnet sind, sondern dass lediglich eine in der Taumelscheibe geführte Taumelstange zum Anschluss von zwei Kolben von Kolben-Zylinder-Einheiten angeordnet ist. Die Anschlussmöglichkeiten der Kolben-Zylinder-Einheiten werden am Gehäuse des Taumelgetriebes und an den Enden der Taumelstangen realisiert. Die Kolben-Zylinder-Einheiten sind dabei kraftausübend, das heißt, dass sie nach dem Otto- oder Diesel-Antriebsprinzip funktionieren. Zu diesem Zweck sind sie mit Ventilen ausgestattet. Das Taumelgetriebe ist somit in einer Kassettenbauweise ausgeführt, die in einfacher Weise den Austausch von erfindungsgemäßen Taumelgetrieben untereinander gewährleistet.

Bei Anordnung von nur einer Kolben-Zylinder-Einheit ist es vorteilhafterweise vorgesehen, dass am erfindungsgemäßen Taumelgetriebe auf der dieser Kolben-Zylinder-Einheit gegenüberliegenden Seite eine Ausgleichsmasse an der Taumelstange anbringbar ist. Das heißt, dass statt einer zweiten Kolben-Zylinder-Einheit an dieser Stelle des Taumelgetriebes eine Ausgleichsmasse an derselben Taumelstange angeordnet ist, womit in einfacher Weise eine Schwingungsminimierung im gesamten Taumelsystem und damit ein ruhigerer Lauf des Taumelgetriebes bei Anschluss nur einer Kolben-Zylinder-Einheit ermöglicht wird.

Vorteilhafterweise ist des Weiteren vorgesehen, dass das Taumelgetriebe eine Antriebswelle aufweist, mit der ein Drehmoment in das Taumelglied des Taumelgetriebes einleitbar ist, wobei das die Antriebswelle aufweisende Taumelgetriebe ein erstes Taumelgetriebe ist, und die Antriebswelle derart ausgestaltet ist, dass sie gleichzeitig als Abtriebswelle eines zweiten Taumelgetriebes funktionieren kann. Dies hat den Vorteil, dass dadurch ein System von Taumelgetrieben herstellbar ist, in dem mindestens zwei und theoretisch unbegrenzt viele Kolben-Zylinder-Einheiten, je nach Anzahl der miteinander gekoppelten Taumelgetriebe, anschließbar sind. Die Antriebs- und die Abtriebswellen sind dabei vorzugsweise symmetrisch angeordnet, das heißt, sie sind auf einer Achse angeordnet und beide mit dem jeweiligen Taumelglied bzw. dessen Taumelscheibe über Mitnehmer in mechanischer Wirkverbindung stehen. Es ist somit eine Einleitung eines Drehmoments in das Taumelgetriebe möglich, um dieses in Rotation zu versetzen und somit bei angeschlossenen Kolben-Zylinder-Einheiten einen Startvorgang durchzuführen.

Dabei kann die Antriebswelle derart ausgestaltet sein, dass sie mit einer Handkurbel formschlüssig zur Einleitung eines Drehmoments in das Taumelgetriebe verbindbar ist. Mit dieser Handkurbel kann, wenn das Taumelgetriebe mit wenigstens einer Kolben-Zylinder-Einheit verbunden ist und somit einen Verbrennungsmotor ausbildet, ein Drehmoment in das Taumelgetriebe eingeleitet werden und der Motor gestartet werden.

Es kann somit ein erfindungsgemäßes Taumelgetriebe-System zur Verfügung gestellt werden, welches eine Mehrzahl von erfindungsgemäßen Taumelgetrieben umfasst, wobei die Antriebswelle eines in Momentenflussrichtung nachgelagerten Taumelgetriebes gleichzeitig die Abtriebswelle eines diesem Taumelgetriebe in Momentenflussrichtung vorgelagerten Taumelgetriebes ist. Vorzugsweise sind zwei Taumelgetriebe in Reihe aneinander angeordnet. Die Momentenflussrichtung ist dabei die Übertragungsrichtung eines Drehmoments von einem Taumelgetriebe in das andere in Richtung des an die in Reihe geschalteten Taumelgetriebe angeschlossenen Verbrauchers bzw. des anzutreibenden Aggregats. Das Drehmoment wird von einem Taumelgetriebe in das darin angeschlossene Taumelgetriebe über die gemeinsame Ab- und Antriebswelle übertragen.

Es ist dabei vorteilhafterweise vorgesehen, dass alle aneinander gekoppelten Taumelgetriebe baugleich sind, und im aneinander gekoppelten Zustand die Taumelglieder derart ausgerichtet sind, dass sie sich bei Betrieb der Taumelgetriebe gegenläufig bewegen. Das heißt, dass in diesem Fall bei Anschluss von Kolben-Zylinder-Einheiten an die Taumelstangen diese Kolben-Zylinder-Einheiten sich auch gegenläufig bewegen, wodurch Schwingungen wesentlich verringert werden und somit eine längere Lebensdauer und eine geringere Geräuschentwicklung beim Betrieb des Getriebesystems zu erwarten ist. Insgesamt weist das erfindungsgemäße Getriebesystem wenig Gleitlager auf, wobei typische in Getriebe bzw. Getriebesystemen verwendete Lagerstellen durch Wälzlager realisiert sind. Dadurch ergibt sich ein geringerer Verschleiß der bewegten Teile und somit ein geringerer Wartungs- und Reparaturbedarf. Ebenfalls ist der Volumenbedarf des vorliegenden Getriebesystems verringert, da alle Kolben-Zylinder-Einheiten in einer Ebene neben den Taumelgetrieben angeordnet sind. Die Baugleichheit der Taumelgetriebe bedingt, dass die Einzelteile der Taumelgetriebe untereinander austauschbar und demzufolge wegen hoher Stückzahl in ihrer Produktion geringe Herstellungskosten aufweisen. Die Kolben-Zylinder-Einheiten können als Module vorliegen, so dass sie sich als geschlossene Einheiten an den in Kassettenbauweise vorliegenden Taumelgetrieben anschließen lassen. Somit liegen durch Verbindung der Taumelgetriebe mit den Kolben-Zylinder-Einheiten hergestellte Verbrennungsmotore ebenfalls in Kassettenbauweise vor. Dadurch ergeben sich insgesamt für das Getriebesystem verringerte Herstellungs-, Reparatur- und Lagerkosten.

Es wird somit erfindungsgemäß ein Verbrennungsmotor zur Verfügung gestellt, welcher ein erfindungsgemäßes Taumelgetriebe umfasst, wobei der Verbrennungsmotor eine erste Kolben-Zylinder-Einheit umfasst, die seitlich am Taumelgetriebe angeschlossen ist. Das heißt, dass der Motor in diesem Fall lediglich aus einem erfindungsgemäßen Taumelgetriebe und nur einer daran angeschlossenen Kolben-Zylinder-Einheit besteht. Die Kolben-Zylinder-Einheit ist in einem gesonderten Gehäuse untergebracht, so dass deren Gehäuse an das Gehäuse des Taumelgetriebes angeschlossen ist. Somit ist der gesamte Motor in Kassettenbauweise ausgeführt. Der Motor ist vorzugsweise als Viertakter ausgeführt.

Zur Schwingungsminimierung kann vorgesehen sein, dass der erfindungsgemäße Verbrennungsmotor eine Ausgleichsmasse umfasst, die seitlich am Taumelgetriebe mechanisch mit der Taumelstange verbunden gegenüber der Kolben-Zylinder-Einheit angeordnet ist.

Der erfindungsgemäße Verbrennungsmotor ist dann vorteilhaft ausgestaltet, wenn am Taumelgetriebe ein Nockenwellenantrieb angeschlossen ist, mit welchem eine Drehbewegung des Taumelgetriebes zur mechanischen Steuerung der Ventile der Kolben-Zylinder-Einheiten auf diese Ventile übertragbar ist.

Es kann dabei vorgesehen sein, dass der Nockenwellenantrieb zur Umsetzung der Taumelgetriebe-Drehbewegung auf die Nockenwelle je Kolben-Zylinder-Einheit lediglich ein Kegelradgetriebe umfasst. Es wird somit im Vergleich zu herkömmlicher Verbrennungsmotortechnik die Einsparung von Zahnriemen oder dergleichen realisiert. Zur Gewährleistung eines ruhigen Laufes des Nockenwellenantriebs können die Kegelräder des Kegelradgetriebes palloid verzahnt sein.

Bevorzugt ist der Verbrennungsmotor dazu geeignet, zumindest einen der Brennstoffe Bioethanol E100 nach DIN 228, Erdgas, 12H; 12E; 12L; 12EII/Methanzahl 59 oder Methan zu verwerten.

Es kann dabei vorgesehen sein, dass der Motor als HybridMotor neben der Verwertung von herkömmlichem Kraftstoff geeignet ist, die vorgenannten alternativen Brennstoffe zu verwerten.

Es wird außerdem ein erfindungsgemäßes Verbrennungsmotorsystem zur Verfügung gestellt, welches das erfindungsgemäße Taumelgetriebe-System umfasst, wobei an einem jeden der Taumelgetriebe wenigstens eine Kolben-Zylinder-Einheit angeschlossen ist. Das heißt, dass in einem erfindungsgemäßen Verbrennungsmotorsystem mit zum Beispiel zwei Taumelgetrieben minimal zwei Kolben-Zylinder-Einheiten angeordnet und maximal vier Kolben-Zylinder-Einheiten angeordnet sein können.

Es kann dabei vorgesehen sein, dass an jedem Taumelgetriebe nur eine Kolben-Zylinder-Einheit angeschlossen ist, wobei alle Kolben-Zylinder-Einheiten auf derselben Seite der in Reihe verbundenen Taumelgetriebe angeordnet sind. Bei Gegenläufigkeit der einzelnen Taumelgetriebe wird somit ebenfalls der Eintrag der Schwingungen in das System verringert. Vorzugsweise sind dabei lediglich zwei Taumelgetriebe miteinander gekoppelt. Es können aber auch, je nach Leistungsanforderung, mehr als zwei Taumelgetriebe im erfindungsgemäßen Verbrennungsmotorsystem miteinander in Reihe gekoppelt sein.

Alternativ dazu kann vorgesehen sein, dass an jedem Taumelgetriebe zwei Kolben-Zylinder-Einheiten angeschlossen sind. Bei Gegenläufigkeit der Kolben auf jeder Seite der Taumelgetriebe wird damit ein sehr ruhiger Lauf der einzelnen Getriebe bzw. Motore bzw. des gesamten Verbrennungsmotorsystems realisiert. Die beiden Kolben-Zylindereinheiten je Taumelgetriebe sind dabei jeweils auf einer Seite des Taumelgetriebes angeschlossen.

Erfindungsgemäß wird des Weiteren ein Energieerzeugungssystem zur Verfügung gestellt, welches den erfindungsgemäßen Verbrennungsmotor oder das erfindungsgemäße Verbrennungsmotorsystem umfasst, wobei an die Abtriebswelle des in Momentenflussrichtung zuletzt angeordneten Verbrennungsmotors ein reversibel betreibbarer Generator angeschlossen ist. Der in Momentenflussrichtung zuletzt angeordnete Verbrennungsmotor ist bei Verwendung nur eines Verbrennungsmotors statt eines Verbrennungsmotorsystems natürlich dieser einzelne Verbrennungsmotor selbst. Der reversibel arbeitende Generator wird als Starter des Motors bzw. des Motorsystems verwendet und nach Zündung in den Kolben-Zylinder-Einheiten vom Elektromotorbetrieb in den Generatorbetrieb umgeschaltet. Somit lässt sich in einfacher Weise ein Starten des Verbrennungsmotors bzw. des Verbrennungsmotorsystems realisieren.

Es wird außerdem ein Verfahren zur Erzeugung von elektrischer Energie zur Verfügung gestellt, wobei eine von einem Generator zur Stromerzeugung umgesetzte Drehbewegung von einem erfindungsgemäßen Verbrennungsmotor oder einem erfindungsgemäßen Verbrennungsmotorsystem erzeugt wird. Das heißt, dass die Energie mit dem bereits beschriebenen erfindungsgemäßen Energieerzeugungssystem erzeugt wird.

Vorteilhafterweise ist dabei vorgesehen, dass zum Starten des Motors bzw. des Motorsystems der Generator reversibel arbeitend verwendet wird oder eine auf eine Antriebswelle eines Taumelgetriebes angeordnete Handkurbel betätigt wird. Es lässt sich somit durch den reversiblen Betrieb des Generators oder durch den Betrieb der Handkurbel eine Einleitung eines Drehmoments in das Motorsystem oder in den Motor zu dessen Antrieb realisieren, wobei nach Zündung der Kraftstoffe in den Kolben-Zylinder-Einheiten der Motor oder das System frei läuft und der Generator wieder im Generatorbetrieb verwendet wird. Die Ventilsteuerung der Kolben-Zylinder-Einheiten wird vorteilhafterweise über einen Nockenwellenantrieb realisiert.

Nachfolgend wird die Erfindung anhand der beiliegenden Zeichnungen beschrieben. Es zeigt dabei
- Figur 1: einen erfindungsgemäßen Verbrennungsmotor mit einem erfindungsgemäßen Taumelgetriebe und mit einer angeschlossenen Kolben-Zylinder-Einheit,
- Figur 2: ein erfindungsgemäßes Verbrennungsmotorsystem mit zwei gekoppelten Taumelgetrieben und mit zwei auf einer Seite angeschlossenen Kolben-Zylinder-Einheiten, und
- Figur 3: ein erfindungsgemäßes Verbrennungsmotorsystem mit zwei gekoppelten Taumelgetrieben und mit vier beidseitig angeschlossenen Kolben-Zylinder-Einheiten.

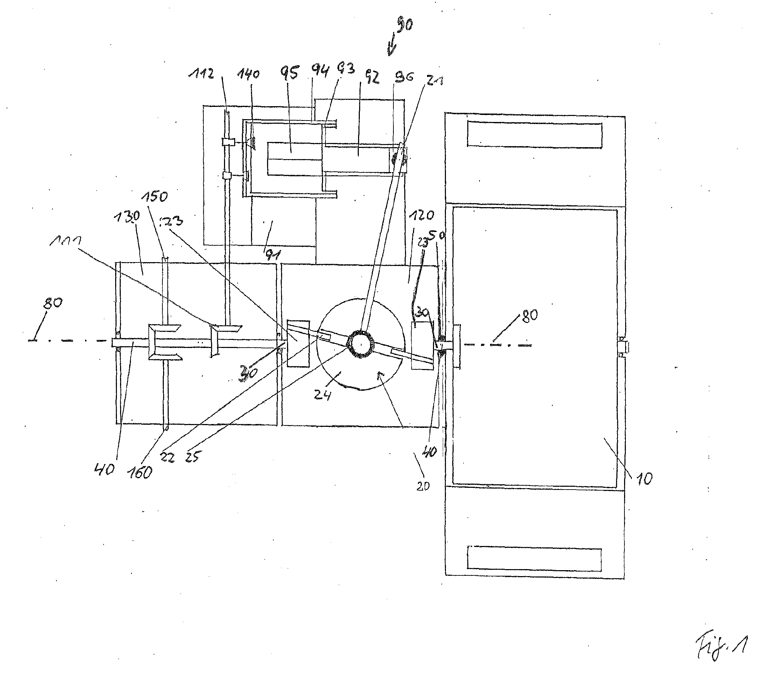

In Figur 1 ist ein erfindungsgemäßer Verbrennungsmotor dargestellt. Dieser Verbrennungsmotor umfasst ein erfindungsgemäßes Taumelgetriebe 20 und eine daran angeschlossene Kolben-Zylinder-Einheit 91. Das heißt, dass die in Figur 1 dargestellte Einrichtung ohne Kolben-Zylinder-Einheit 91 dem erfindungsgemäßen Taumelgetriebe 20 entsprechen würde. Dadurch, dass am Verbrennungsmotor bereits der Generator 10 angeschlossen ist, ist der in Figur 1 dargestellte Motor bereits Teil eines erfindungsgemäßen Energieerzeugungssystems.

In Figur 1 umfasst das Taumelgetriebe 20 eine Taumelstange 21, die in einem Gelenklager 25 des Taumelgetriebes drehbeweglich gelagert ist. Zur Ermöglichung der Taumelbewegung der Taumelstange 21 steht diese mit einer Taumelscheibe 24 in mechanischer Wirkverbindung. In der Taumelscheibe 24 sind Mitnehmerzapfen 22 translatorisch verschiebbar gelagert. Diese Mitnehmerzapfen 22 greifen in Mitnehmer 23 ein, die mit den Abtriebswellen 30 fest verbunden sind. Das Ende der Taumelstange 21 ist mit einem Gelenklager 96 verbunden, welches andererseits mit einem Pleuel 52 in mechanischer Wirkverbindung steht. An dem Pleuel 92 ist der Kolben 93 der dargestellten Kolben-Zylinder-Einheit 91 angeordnet. Der Kolben 93 läuft im Zylinder 94. Zur Verhinderung einer Drehbewegung des Kolbens 93 um seine Translationsachse ist eine Pleuelführung 95 angeordnet. Diese Pleuelführung 95 stützt sich im Gehäuse des Taumelgetriebes 120 ab.

Wie in Figur 1 dargestellt, ist eine Abtriebswelle 30 des Taumelgetriebes 20 mit einem Nockenwellenantrieb 100 in Wirkzusammenhang gebracht. Das heißt, dass das Taumelgetriebe 20 zwei Abtriebswellen 30 aufweist, die auf der gemeinsamen Achse 80 angeordnet sind. Der Nockenwellenantrieb 100 umfasst ein Kegelradgetriebe 110, welches ein Ritzel zum Antreiben des Kegelrades 111 auf der einen Abtriebswelle 30 aufweist. Die antreibenden Kegelräder 111 sind fest mit den Nockenwellen 112 verbunden. Der Nockenwellenantrieb 100 ist dabei im Gehäuse des Nockenwellenantriebs 130 gelagert. Die Nockenwellen 112 treiben die Ventile 140 an der Kolben-Zylinder-Einheit 91 an. Zur Vereinfachung des erfindungsgemäßen Motorsystems ist vorgesehen, dass durch die eine Abtriebswelle 30 Wasserpumpenantriebswellen 150 bzw. Ölpumpenantriebswellen 160 ebenfalls über Kegelradgetriebe 110 angetrieben werden. Die Lagerung der Abtriebswellen 30 erfolgt im Gehäuse des Taumelgetriebes 120 über Wälzlager 50. Die Kegelräder des Kegelradgetriebes 110 für den Nockenwellenantrieb 100 sind vorteilhafterweise palloid verzahnt. Die Kraftübertragung auf die Nockenwelle 112 erfolgt über eine Kerbverzahnung.

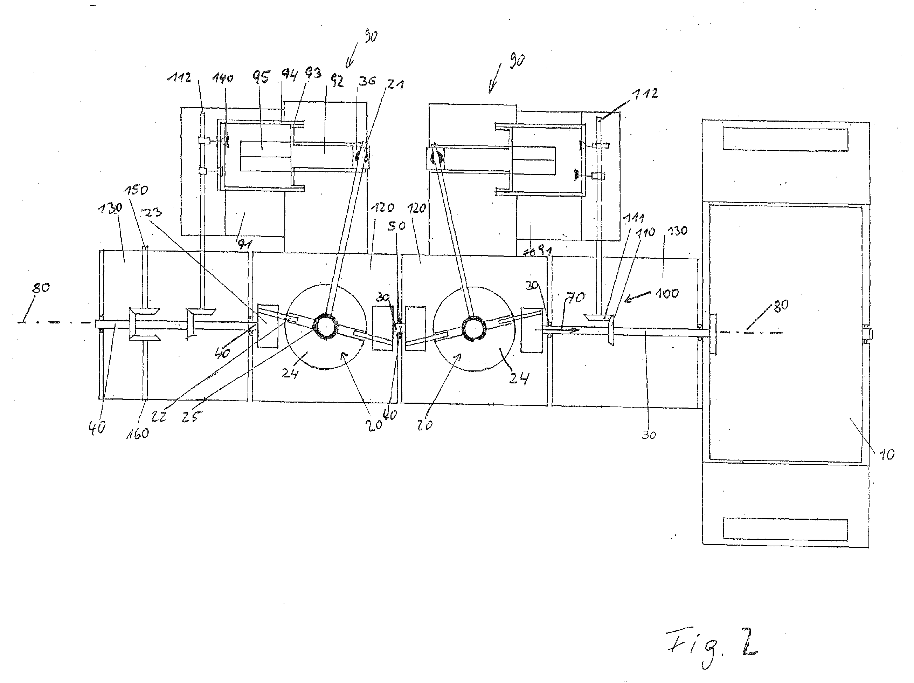

Figur 2 zeigt zwei miteinander in Reihe gekoppelte Taumelgetriebe 20 mit zwei Kolben-Zylinder-Einheiten 91, die an nur einer Seite der Taumelgetriebe 20 angeschlossen sind. Durch den Anschluss des Generators 10 stellt Figur 2 bereits auch ein Energieerzeugungssystem dar.

Zur Schwingungsminimierung gegenüber den angeschlossenen Kolben-Zylinder-Einheiten 91 angeordnete Ausgleichsmassen sind in der in Figur 2 dargestellten Ausführungsform nicht gezeigt. Dadurch, dass zwei erfindungsgemäße Taumelgetriebe 20 miteinander verbunden sind, ist die eine in Figur 1 gezeigte Abtriebswelle 30 gleichzeitig eine Antriebswelle 40 des daran gekoppelten zweiten Taumelgetriebes 20 zwischen den beiden Taumelgetrieben 20. Auch das daran gekoppelte Taumelgetriebe 20 weist eine Antriebswelle 40 zum Beispiel zur Anordnung einer Handkurbel auf. Es ist ersichtlich, dass beide Taumelgetriebe 20 gegenläufig betreibbar sind. Das heißt, dass sich die Kolben der an einer Seite der Taumelgetriebe 20 angeordneten Kolben-Zylinder-Einheiten 91 im Betrieb in entgegengesetzten Richtungen bewegen. Dadurch werden die Schwingungen im Motorsystem verringert. Das in Figur 2 dargestellte Motorsystem würde bei Nichtanordnung der dargestellten Kolben-Zylinder-Einheiten 91 dem erfindungsgemäßen Taumelgetriebesystem entsprechen.

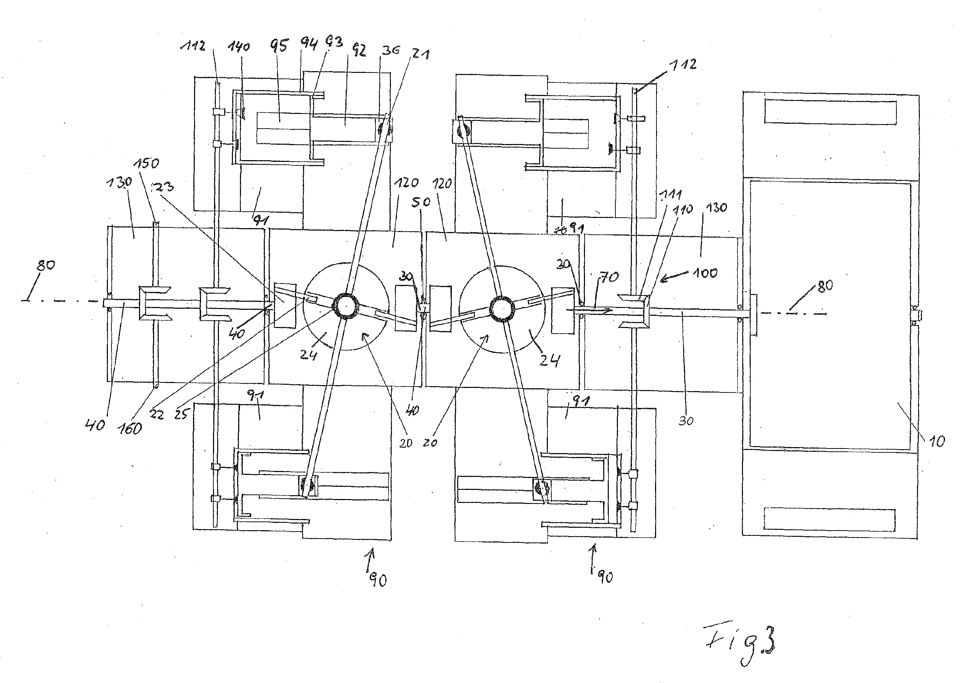

Am deutlichsten ist die vorliegende Erfindung in Figur 3 ersichtlich. In Figur 3 ist ebenfalls ein erfindungsgemäßes Verbrennungsmotorsystem dargestellt, welches an einen Generator 10 zur Stromerzeugung angeschlossen ist. Das heißt, in Figur 2 ist ebenfalls bereits ein Energieerzeugungssystem dargestellt. Der Generator 10 ist dabei reversibel betreibbar. Das Motorsystem umfasst zwei Taumelgetriebe 20, welche in Reihe aneinander gekoppelt sind. Die Abtriebswelle 30 des in Momentenflussrichtung 70 am dichtesten am anzutreibenden Generator 10 angeordneten Taumelgetriebes 20 steht mit der Antriebsseite des Generators 10 in mechanischem Wirkzusammenhang. Die Antriebswelle 40 dieses Taumelgetriebes 20 ist zugleich die Abtriebswelle 30 des in Momentenflussrichtung 70 zuerst angeordneten Taumelgetriebes 20. Das heißt, dass ein durch dieses Taumelgetriebe 20 erzeugtes Drehmoment über dessen Abtriebswelle 30 und damit in die Antriebswelle 40 des in Momentenflussrichtung 70 nachgelagerten Taumelgetriebes 20 geleitet wird, wo es sich mit dem in diesem Taumelgetriebe 20 erzeugten Drehmoment addiert und als Gesamtantriebsmoment in den Generator 10 übertragen wird. Es ist in Figur 3 dargestellt, dass auch das in Momentenflussrichtung 70 zuerst angeordnete Taumelgetriebe 20 eine Antriebswelle 40 aufweist, wodurch es ermöglicht wird, an diese Antriebswelle 40 zum Beispiel eine Handkurbel zum Starten des Motorsystems zur Drehbewegungserzeugung in den Taumelgetrieben 20 und zur translatorischen Bewegungserzeugung von Kolben 93 in Zylindern 94 zu erzeugen.

Dabei muss das Motorsystem nicht unbedingt wie in Figur 3 dargestellt ausgeführt sein, sondern es kann derart ausgestaltet sein, dass das in Momentenflussrichtung 70 zuerst angeordnete Taumelgetriebe 20 keine Antriebswelle 40 umfasst, wobei der im Normalbetrieb anzutreibende Generator 10 reversibel funktionieren kann. Das heißt, dass in dieser Ausgestaltung der Erfindung der Generator 10 in der Startphase des Motorsystems als Elektromotor zur Erzeugung der Startbewegungen funktioniert und bei Erreichung des Betriebszustandes des Motorsystems auf Generatorbetrieb umgeschaltet wird, so dass im Generatorbetrieb Strom erzeugt werden kann.

Wie dargestellt, realisiert ein Taumelgetriebe 20 zusammen mit den daran angeschlossenen Kolben-Zylinder-Einheiten 91 einen erfindungsgemäßen Verbrennungsmotor 90. Die Zusammenschaltung von zwei Motoren in Reihe, wie in den Figuren 2 und 3 dargestellt, bildet ein erfindungsgemäßes Motorsystem aus. Es ist dabei bevorzugt vorgesehen, dass die An- und Abtriebswellen 40, 30 auf einer gemeinsamen Achse 80 angeordnet sind. Ein Taumelgetriebe 20 zusammen mit den daran angeschlossenen Kolben-Zylinder-Einheiten 91, die einen Motor 90 ausbilden, ist dabei als kompakte Kassette ausgeführt. Wie dargestellt, lassen sich theoretisch unbegrenzt viele derartiger Kassetten in Reihe nacheinander anordnen und miteinander mechanisch verbinden. Diese Variabilität hinsichtlich der Anzahl der einzelnen Motore im Zusammenhang mit der Identität der An- und Abtriebswellen 40, 30 zwischen den Taumelgetrieben 20 ermöglicht eine flexible Anpassung des gesamten Motorsystems an schwankende Leistungsanforderungen.

Wie in den Figuren 2 und 3 dargestellt arbeiten beide Motore gegenläufig. Das heißt, dass bei selber Frequenz der Auslösung der Zündung in den Kolben-Zylinder-Einheiten 91 die Taumelstangen 21 derart bewegt werden, dass sie gleichzeitig eine Drehung mit jeweils entgegengesetztem Drehsinn ausführen. Das bedeutet, dass die beiden auf einer Seite der gemeinsamen Achse 80 angeordneten Kolben 93 der Kolben-Zylinder-Einheiten 91 simultan translatorische Bewegungen in entgegengesetzten Richtungen ausführen. Das bewirkt, dass die Massenträgheitsmomente der sich drehenden Taumelstangen 21 in den beiden Motoren 90 bei Betrachtung des Motorsystems als geschlossene Einheit aufgrund der gegenläufigen Drehbewegungen aufgehoben werden. Dasselbe betrifft die Aufhebung der Trägheitskräfte der auf einer Seite der gemeinsamen Achse 80 angeordneten Kolben 93, die sich ständig entgegengesetzt bewegen.

Insgesamt lässt sich durch die Gegenläufigkeit der Taumelgetriebe 20 ein vibrationsarmer und geräuscharmer Motorlauf realisieren. Das Motorsystem lässt sich in Kassettenbauweise ausführen, wobei bevorzugt eine gerade Anzahl von Kolben-Zylinder-Einheiten 90 am Motorsystem angeordnet sind. Durch die so genannte "H-Motorenanordnung" zur Erzielung eines hohen Ausgleichs sämtlicher freien Massekräfte und Drehmomente in allen Freiheitsgraden werden Schwingungen im Motorsystem sowie in dessen Fundament vermieden. Dadurch, dass die Anzahl der zu bewegenden Teile verringert ist, entsteht im Vergleich zu herkömmlichen Anlagen verminderte Reibung, was einen Anstieg des Gesamtwirkungsgrades zur Folge hat. Ebenfalls ergeben sich aufgrund eines geringeren Verschleißes längere Laufzeiten der Motore. Außerdem wird durch die Flachbauweise des Motorensystems ein relativ geringer Platzbedarf realisiert.

Die Motore des Motorensystems können als Hybridmotore ausgestaltet sein, das heißt, sie können unterschiedliche Brennstoffe verwerten. Jede Kolben-Zylinder-Einheit 91 hat einen eigenen Nockenwellenantrieb und ist somit hinsichtlich seines Ventilbetriebes separat einstellbar. Als Pleuel 92 lässt sich ein in sich geschlossenes Bauteil verwenden, welches nicht, wie zum Beispiel bei einem Motor mit Kurbelwelle geteilt und damit kostenintensiv ausgestaltet ist.

### Bezugszeichenliste

- 10: Generator
- 20: Taumelgetriebe
- 21: Taumelstange
- 22: Mitnehmerzapfen
- 23: Mitnehmer
- 24: Taumelscheibe
- 25: Gelenklager des Taumelgetriebes
- 30: Abtriebswelle
- 40: Antriebswelle
- 50: Wälzlager
- 70: Momentenflussrichtung
- 80: Gemeinsame Achse der An- und Abtriebswellen
- 90: Motor
- 91: Kolben-Zylinder-Einheit
- 92: Pleuel
- 93: Kolben
- 94: Zylinder
- 95: Pleuelführung
- 96: Gelenklager
- 100: Nockenwellenantrieb
- 110: Kegelradgetriebe
- 111: antreibendes Kegelrad
- 112: Nockenwelle
- 120: Gehäuse des Taumelgetriebes
- 130: Gehäuse des Nockenwellenantriebes
- 140: Ventil
- 150: Wasserpumpenantriebswelle
- 160: Ölpumpenantriebswelle

## Patentansprüche

1. Taumelgetriebe, an welches mindestens eine und maximal zwei Kolben-Zylinder-Einheiten anschließbar sind, wobei im Fall von zwei Kolben-Zylinder-Einheiten (91)diese beiden Kolben-Zylinder-Einheiten (91) einander gegenüberliegend auf je einer Seite des Taumelgetriebes (20) anschließbar sind, und wobei das Taumelgetriebe unabhängig von der Anzahl der Kolben-Zylinder-Einheiten eine von einem Taumelglied antreibbare Abtriebswelle (30) umfasst und das Taumelgetriebe (20) derart ausgestaltet ist, dass mit ihm im Betrieb mit einer angeschlossenen Kolben-Zylinder-Einheit (91) oder auch mit zwei angeschlossenen Kolben-Zylinder-Einheiten (91) ein Drehmoment mit ausreichender Stärke und Kontinuität zum Antrieb eines Generators auf die Abtriebswelle (30) aufbringbar ist.

2. Taumelgetriebe nach Anspruch 1,
**dadurch gekennzeichnet, dass**
bei Anschluss von nur einer Kolben-Zylinder-Einheit (91) an der dieser Kolben-Zylinder-Einheit (91) gegenüberliegenden Seite des Taumelgetriebes (20) eine Ausgleichsmasse anbringbar ist.

3. Taumelgetriebe nach wenigstens einem der vorhergehenden Ansprüche,
**dadurch gekennzeichnet, dass**
das Taumelgetriebe (20) eine Antriebswelle (40) aufweist, mit der ein Drehmoment in das Taumelglied des Taumelgetriebes (20) einleitbar ist, wobei das die Antriebswelle (40) aufweisende Taumelgetriebe (20) ein erstes Taumelgetriebe ist und die Antriebswelle (40) derart ausgestaltet ist, dass sie als Abtriebswelle (30) in einem zweiten Taumelgetriebe (20) aufnehmbar ist.

4. Taumelgetriebe nach Anspruch 3,
**dadurch gekennzeichnet, dass**
die Antriebswelle (40) derart ausgestaltet ist, dass sie mit einer Handkurbel formschlüssig zur Einleitung eines Drehmomentes in das Taumelgetriebe (20) verbindbar ist.

5. Taumelgetriebe-System, welches eine Mehrzahl von Taumelgetrieben nach wenigstens einem der Ansprüche 1 bis 4 umfasst und in welchem die Antriebswelle (40) eines in Momentenflussrichtung nachgelagerten Taumelgetriebes (20) gleichzeitig die Abtriebswelle (30) eines diesem Taumelgetriebe (20) in Momentenflussrichtung vorgelagerten Taumelgetriebes (20) ist.

6. Taumelgetriebe-System nach Anspruch 5,
**dadurch gekennzeichnet, dass**
alle Taumelgetriebe (20) baugleich sind und im aneinander gekoppelten Zustand die Taumelglieder derart ausgerichtet sind, dass sie sich bei Betrieb der Taumelgetriebe (20) gegenläufig bewegen.

7. Verbrennungsmotor, welcher ein Taumelgetriebe nach wenigstens einem der Ansprüche 1 bis 4 aufweist, wobei der Motor (90) eine erste Kolben-Zylinder-Einheit (91) umfasst, die seitlich am Taumelgetriebe (20) angeschlossen ist.

8. Verbrennungsmotor nach Anspruch 7,
**dadurch gekennzeichnet, dass**
er eine Ausgleichsmasse umfasst, die seitlich am Taumelgetriebe (20) mechanisch mit der Taumelstange (21) verbunden gegenüber der Kolben-Zylinder-Einheit (91) angeordnet ist.

9. Verbrennungsmotor nach wenigstens einem der Ansprüche 7 bis 8,
**dadurch gekennzeichnet, dass**
am Taumelgetriebe (20) ein Nockenwellenantrieb (100) angeschlossen ist, mit welchem eine Drehbewegung des Taumelgetriebes (20) zur mechanischen Steuerung der Ventile (140) der Kolben-Zylinder-Einheit (91) auf diese Ventile (140) übertragbar ist.

10. Verbrennungsmotor nach Anspruch 9,
**dadurch gekennzeichnet, dass**
der Nockenwellenantrieb (100) zur Umsetzung der Taumelgetriebe-Drehbewegung auf die Nockenwelle (112) je Kolben-Zylinder-Einheit (91) lediglich ein Kegelradgetriebe (110) umfasst.

11. Verbrennungsmotor nach wenigstens einem der Ansprüche 7 bis 10,
**dadurch gekennzeichnet, dass**
er geeignet ist, zumindest einen der Brennstoffe Bioethanol E100 nach DIN 228, Erdgas, 12H; 12E; 12L; 12EII/Methanzahl 59 oder Methan zu verwerten.

12. Verbrennungsmotor nach Anspruch 11,
**dadurch gekennzeichnet, dass**
der Motor (90) als Hybridmotor neben der Verwertung von herkömmlichem Kraftstoff geeignet ist, die im Anspruch 11 genannten Kraftstoffe zu verwerten.

13. Verbrennungsmotorsystem, welches das Taumelgetriebe-System nach wenigstens einem der Ansprüche 5 oder 6 umfasst, wobei an jedem der Taumelgetriebe (20) wenigstens eine Kolben-Zylinder-Einheit (91) angeschlossen ist.

14. Verbrennungsmotorsystem nach Anspruch 13,
**dadurch gekennzeichnet, dass**
an jedem Taumelgetriebe (20) nur eine Kolben-Zylinder-Einheit (91) angeschlossen ist, wobei alle Kolben-Zylinder-Einheiten (91) auf der selben Seite der in Reihe verbundenen Taumelgetriebe (20) angeordnet sind.

15. Verbrennungsmotorsystem nach Anspruch 13,
**dadurch gekennzeichnet, dass**
an jedem Taumelgetriebe (20) zwei Kolben-Zylinder-Einheiten (91) angeschlossen sind.

16. Energieerzeugungssystem, welches den Verbrennungsmotor nach wenigstens einem der Ansprüche 7 bis 12 oder das Verbrennungsmotorsystem nach wenigstens einem der Ansprüche 13 bis 15 umfasst, wobei an die Abtriebswelle (30) des in Momentenflussrichtung zuletzt angeordneten Verbrennungsmotors ein reversibel betreibbarer Generator angeschlossen ist.

17. Verfahren zur Erzeugung von elektrischer Energie, wobei eine von einem Generator zur Stromerzeugung umgesetzte Drehbewegung von einem Verbrennungsmotor nach einem der Ansprüche 7 bis 12 oder ein Verbrennungsmotorsystem nach wenigstens einem der Ansprüche 13 bis 15 erzeugt wird.

18. Verfahren zur Erzeugung von elektrischer Energie nach Anspruch 17,
**dadurch gekennzeichnet, dass**
zum Starten des Motors (90) beziehungsweise des Motorsystems der Generator reversibel arbeitend verwendet wird oder eine auf eine Antriebswelle (40) eines Taumelgetriebes (20) angeordnete Handkurbel betätigt wird.
